# EUROPEAN PATENT SPECIFICATION

(11) **EP 3 562 350 B1**
(45) Date of publication and mention of the grant of the patent: **08.02.2023**
(21) Application number: 17879186.9
(22) Date of filing: 05.12.2017
(51) Int. Cl.: B60N 2/34, B60N 2/64, B60N 2/90, B60N 2/01, B60N 3/00, B60R 7/04, B64D 11/06, H04N 7/18, G06F 1/16

(54) **SEAT FOR AN OCCUPANT**
SITZ FÜR EINEN INSASSEN
SIÈGE POUR UN OCCUPANT

(30) Priority: 06.12.2016 US 201662430910 P; 31.03.2017 US 201762480071 P
(43) Date of publication of application: 06.11.2019
(73) Proprietor: Rajasingham, Arjuna Indraeswaran, Galway (IE)
(72) Inventor: Rajasingham, Arjuna Indraeswaran, Galway (IE)
(86) International application number: PCT/US2017/064626
(87) International publication number: WO 2018/106640

(56) References cited:
- EP-A1- 0 639 479
- EP-A1- 1 207 074
- EP-A2- 0 723 890
- JP-A- S5 657 411
- US-A- 2 522 887
- US-A- 6 155 519
- US-A1- 2003 006 636
- US-A1- 2007 057 562
- US-A1- 2009 288 123

## Description

### FIELD OF INVENTION

The present invention provides a new structure and passenger transport paradigm for accommodating passengers in a vehicle with particular attention paid to safety, utility and comfort.

### BACKGROUND

EP 0 639 479 A1 discloses a seat for an occupant with two seat elements (see for instance Figs. 1 - 3): a back; and a bottom, for the support of said occupant. EP 1 207 074 A1 discloses a seat and uses pivoted elements SA - SK within a seat, said pivoted elements are used to change the hardness or softness of the seat, JPS5657411 A discloses a seat and uses pivoted elements 4-6 and 11 - 13 within a seat, said pivoted elements are used to obtain a comfortable position of an occupant of the seat, and EP 0 723 890 A2 discloses a seat for an occupant with two seat elements, wherein a given fixed shape of the seat cushion is used for limiting an occupant motion parallel to a seat element.

### SUMMARY

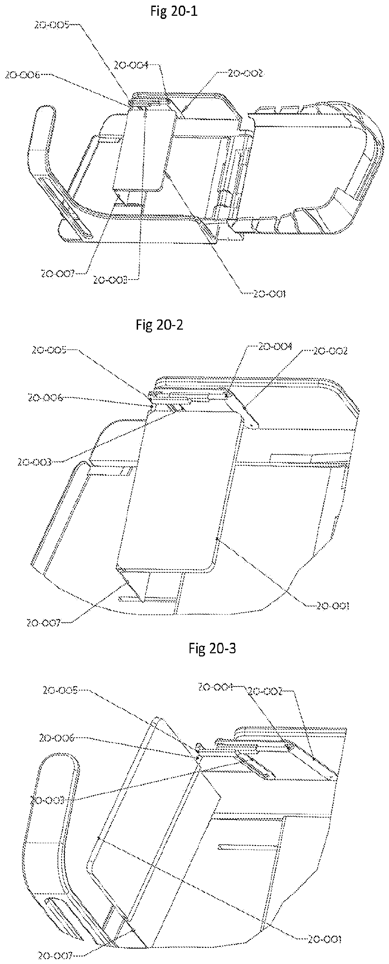

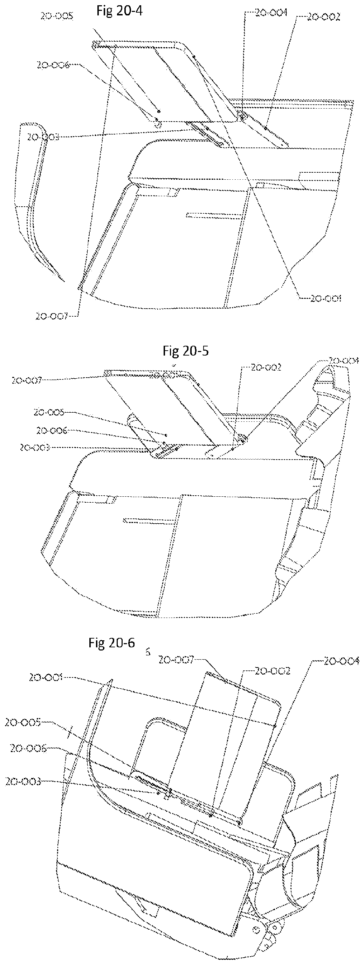

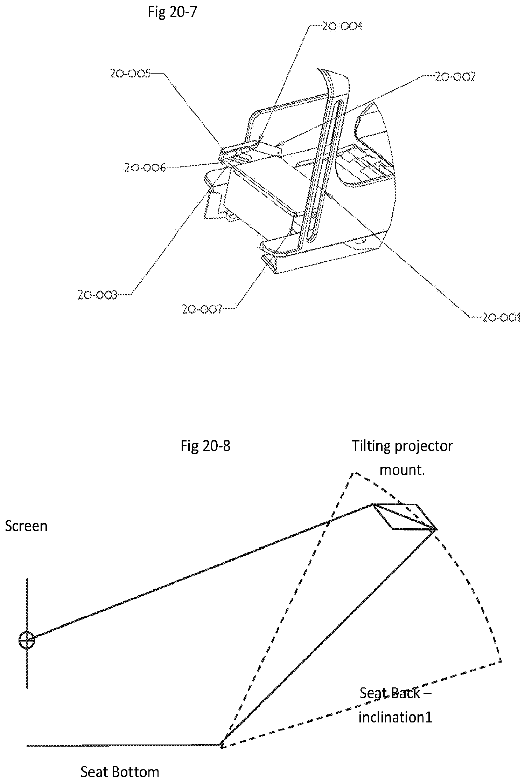

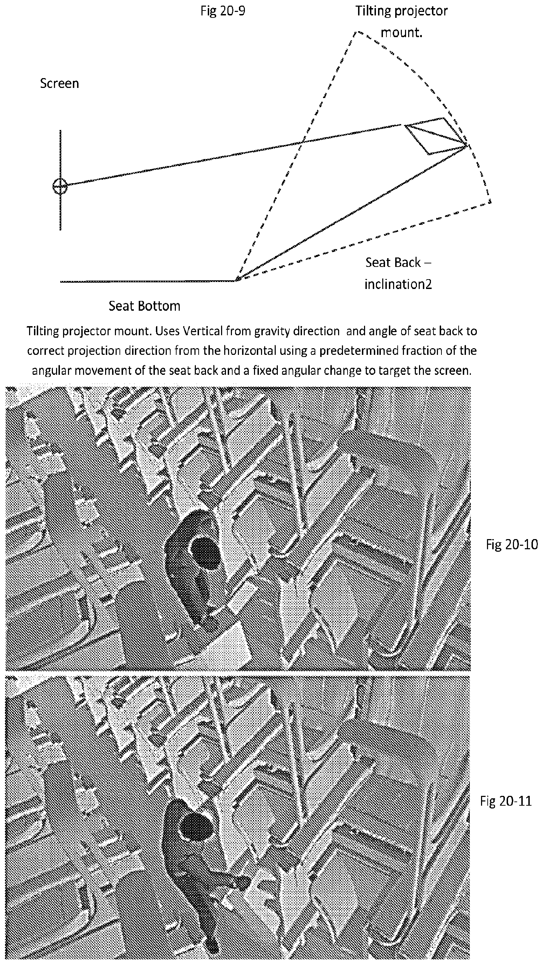

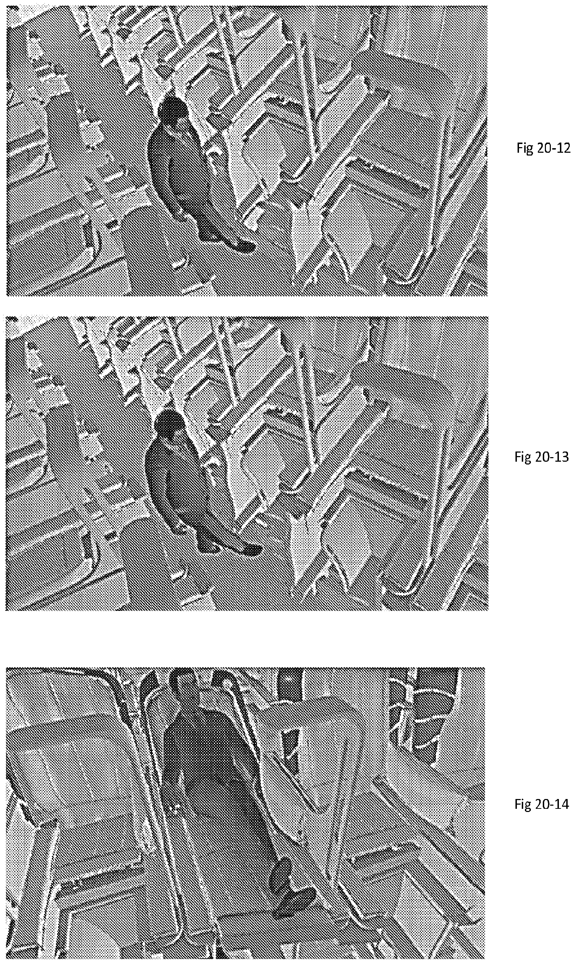

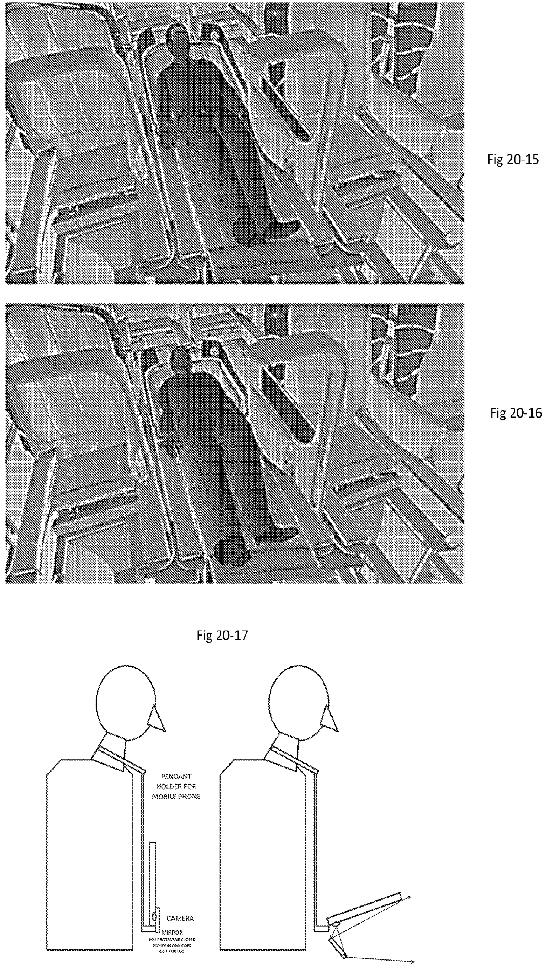

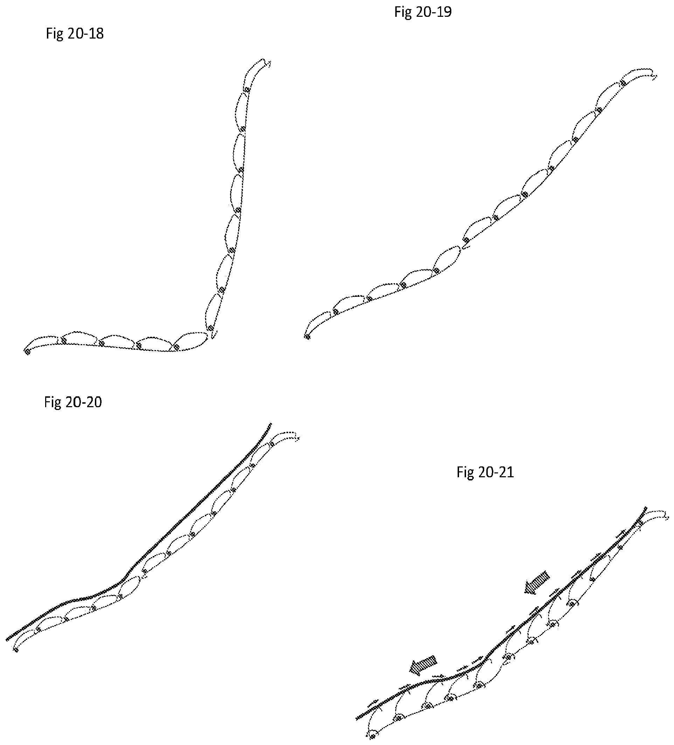

The Figures 20-18, 20-19, 20-20, 20-21 illustrate one embodiment of the claimed invention.

These features and more are described below.

### BRIEF DESCRIPTION OF DRAWINGS

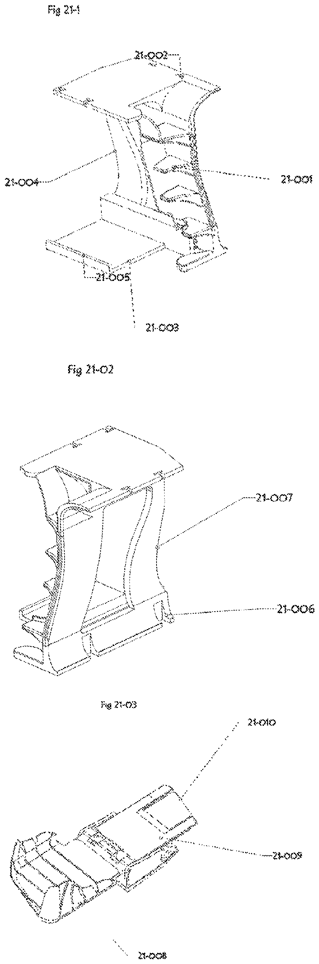

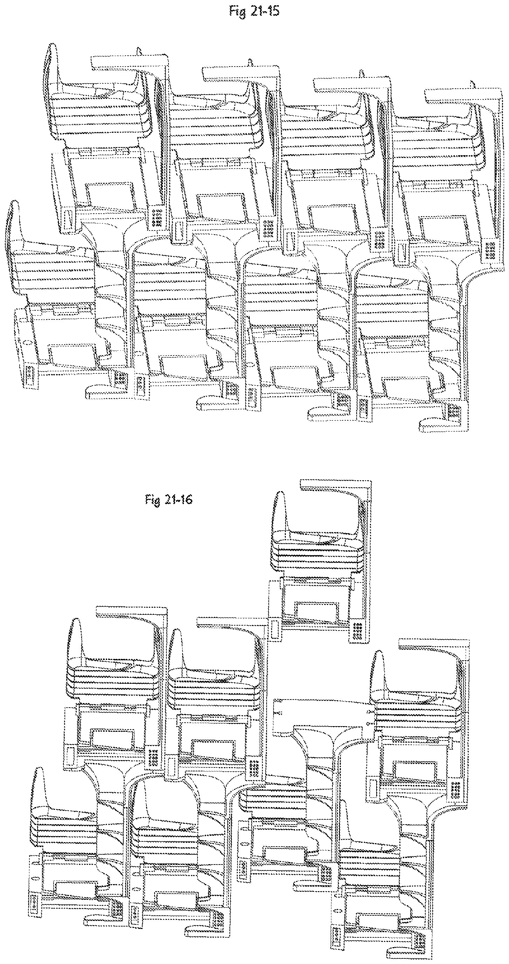

In the following, Figures 20-1 to 20-17 and Figures 21-1 to 21-16 do not belong to the claimed invention while Figures 20-18 to 20-21 illustrate one embodiment of the claimed invention.
20-001-Table top
20-002- Back pivot-arm
20-003 - Front-pivot -arm
20-004- First pivot member
20-005-Second pivot member
20-006-Third pivot member
20-007 - Screen - privacy
   Figure 1 represents the position of the tabletop used in the air sleeper in a position for use as a table. The privacy screen is at the front of the table also in a position to offer privacy to the occupant of the seat. Notably the second pivot member may allow sliding forward and backwards of the tabletop. This is in addition to the swiveling action of the front and back pivot arms which allow the position to be adjusted with appropriate locks in predetermined positions.
   Figure 2-7 show the tabletop in greater detail.
   Figure 2 as in figure 1 shows a tabletop in a usable position and the screen vertically deployed.
   Figure 3 shows the tabletop vertically inclined. From this position to thing off the front and back pivot arms and also sliding off the second pivot member will allow different positions for deployment of the table which now functions as a screen in addition to the privacy screen. This combination of the tabletop and the screen may also be pivoted about the third pivot member to be angled to the seat and in fact at the same angle as the aisle so that it may be deployed at the front edge of the seat when the passenger is sleeping or otherwise wants privacy relative to the aisle.
      The tabletop may also be used as a projection screen as noted below and such a position would facilitate that function.
   Figure 4 illustrates the moment about the third pivot member relative to figure 3 so that the screen and the tabletop are now aligned with the side of the air sleeper. Such a position could proceed storage of the tabletop at the side of the air sleeper space.
   Figure 5 and figure 6 illustrate the process of storing the tabletop into the side of the air sleeper seat space.
   Figure 7 illustrates a position for a horizontal tabletop at a lower level and forward from the passenger using the tilting mechanisms from the back and front pivot arms and sliding mechanisms of pivot members to allow service to the passenger at a lower political level by the service provider. Moreover, the handle as seen on the front pivot arm may be actuated by the passenger to allow this motion for service and back to a position convenient for use of the tabletop.
   Figure 8 shows a mechanism for a projector attached to the seatback of the air sleeper's seat to project to a screen at the front of the seat space. The screen may be very oriented tabletop, or a screen that is deployed from the top frame of the air sleeper. Considering that the seatback may have different angular orientations to the vertical provision needs to be made for the projector to project to the screen. While there are many complex control mechanisms available, a simple approach minimizing both weight and my function, is to use the direction of gravity by supporting the projector appropriately so that there is a horizontal line for calibration available, and also using the angle of the seatback. Using these two references the projection direction of the projector may be maintained to be at the center of the screen by using a predetermined fraction of the angular motion of the seatback along with a correction fixed angle.
   Figure 9 illustrates a different inclination of the seatback with the same mechanism in place.
   Figures 10 to 13 show an embodiment of the drawer storage below the seat in the air sleeper structure. In figure 10 the passenger has opened the drawer. The drawer may be opened with a "kick switch" which allows the utility of opening the drawer without bending down. Moreover, there is no lifting heavy baggage above head level as in conventional aircraft.
   In figure 11 the luggage is loaded into the drawer.
   Figure 12 and 13 shows the kick operation to shut the drawer. Again this process eliminates the need to bend down to attend to storing hand luggage.
   Figures 14, 15 and 16 show a side screen that is deployed at the time the seat becomes a flatbed for privacy vis-à-vis the sides. This may be independently controlled also to provide privacy.
   Fig 17 shows an embodiment of the support for Source on the Source Member for the virtual Navigation system.
   Fig 18, 19, 20, 21 illustrate one embodiment of the claimed invention and show the operation of the adaptive support seat for the high angle flat bed recline seat usually for economy class in aircraft.
21-001 - stairs
21-002 - Latches
21-003 --Seat pan support
21-004 - Beam - structural and part of airsleeper enclosure
21-005 - Lip for seat pan lateral support. Latched to adjoining AirSleeper structure may be installed.
21-006 - Latch wells & latch attachments. For mounting on seat tracks or frames attached to seat tracks.

Latches on seat tracks and/or between lower and upper AirSleeper units may have vertical excursions and allowances in such situations are provided.
21-007 - Beam structure for support of upper AirSleeper units.
   Serves as wall for lower AirSleeper enclosures.
21-008 - Seatback
21-009 - Seat bottom
21-010 - Leg rest
21-011-Seat pan
21-012 - Arm rest and side sleep surface
21-013 - Support surface for seat assembly
21-014 - Handrail/ bannisters for climbing steps
21-015 - Support for privacy curtain/ oxygen/projector/video screen
21-016 - Base of upper AirSleeper enclosure with in some embodiments houses latches for attachment to lower AirSleeper units and/or the laterally displaced AirSleeper units.
21-017 - Lower AirSleeper unit.
21-018 - Upper AirSleeper unit
21-019 - Unlatched and raised upper air sleeper unit
21 -020 - Lower AirSleeper unit raised for removal. (or re-insertion)
21-021 - Latches for adjoining AirSleeper units. Single or multiple vertically and/or horizontally spaced.
   Fig 21-01 is a view of an embodiment of the AirSleeper lower level enclosure, built as a beam representing the wall between two AirSleeper enclosures.
   Fig 21-02 is a second view of the same enclosure with a beam structure.
   Fig 21-03 is the (potentially universal in some embodiments) seat assembly that can be installed in the top or bottom air sleepers.

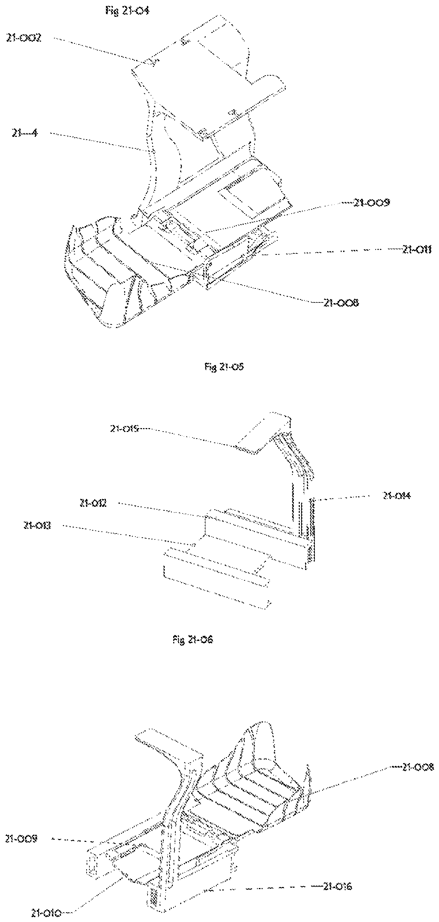

   Fig 21-04 is the lower enclosure/support beam with the seat assembly installed.
   Fig 21-05 is the Upper enclosure support. It may have a hand rail and support for oxygen and projector or screen.
   Fig 21-06 is the Upper AirSleeper enclosure with seat assembly installed.

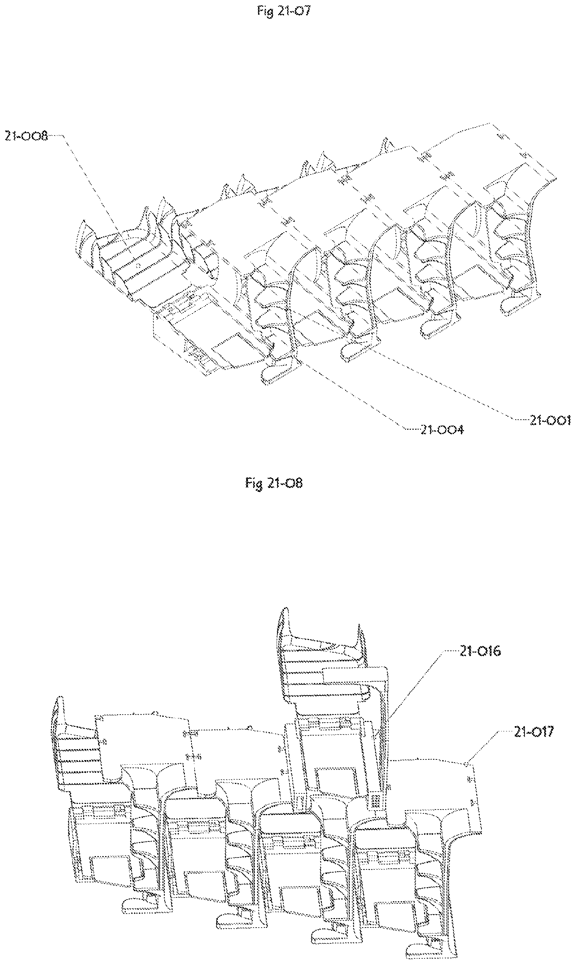

   Fig 21-07 is an assemble array of lower airsleeper enclosures. Notably the lateral latches between the units line up. This embodiment has a "herring bone" angle to the lateral.
   Fig 21-08 is a lower array of AirSleeper units with a single upper AirSleeper unit installed.

It may be noticed that in this embodiment the Upper AirSleeper is entirely on the horizontal flange provided by the beam below along with the steps. The flange of the lower airsleeper enclosure on either side of the vertical beam latch to the adjoining lower airsleeper beam flanges to form the enclosures. They also latch on the upper air sleeper units.

Notably other embodiments may have an overlap ie the flanges are asymetric and therefore the upper airsleeper units rest on flanges of adjoining lower airsleeper beams. The advantage is rigidity which has structural benefit and weight saving, but the disadvantage in that to remove a single lower airsleeper unit it may be necessary to remove two upper units if there is such an overlap. Often latches between the adjoining lower AirSleeper flanges can be designed to support the required loading without the overlap of the upper units over two lower units. The lower latches of the lower tier Air Sleepers may be attached directly to the latches on the seat tracks at the floor of the aircraft or to the frames that include storage bins below the Lower AirSleeper units. These alternative embodiments will depend on the available vertical space in the cabin. The embodiments that have the lower tier of Air Sleeper enclosures attached directly to the latches on the seat tracks are typically attractive when there is a smaller vertical clearance but in such situations storage bins may be located above the upper tier of AirSleeper units.

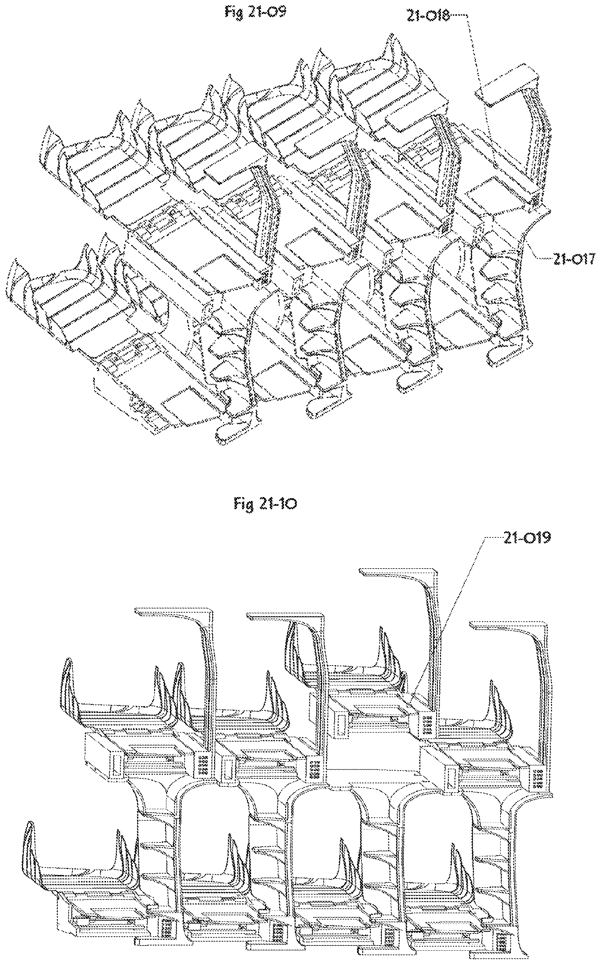

Fig 21-09 shows the upper and lower arrays attached together.

Fig 21-10 shows the removal of a single upper tier AirSleeper without disrupting the rest of the array.

Notably the back rest can be folded up and in to make a compact unit. Moreover, when the back rests of all the AirSleepers are raised there is a corridor in that space along the fuselage of the aircraft.

A second option is of course to unlatch the seat assembly separately and then the upper AirSleeper unit.

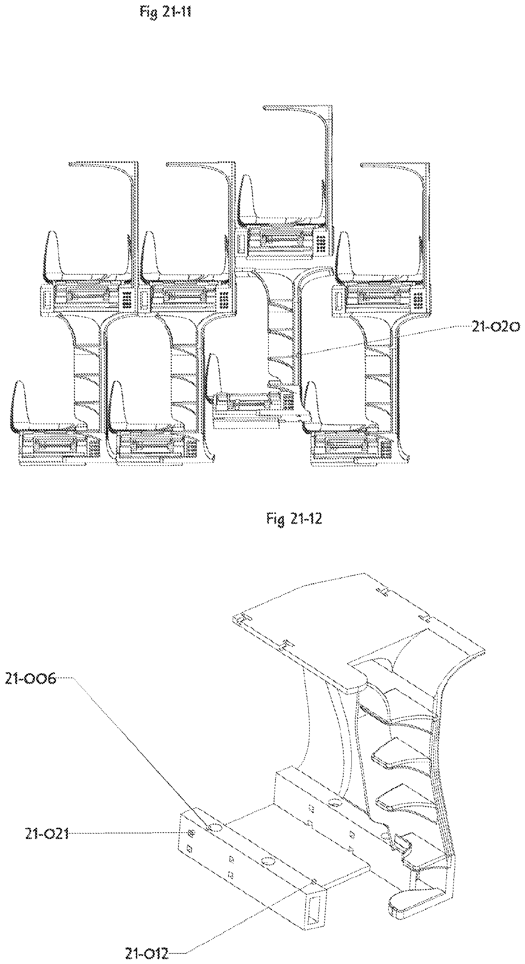

Fig 21-11 shows an unlatched lower AirSleeper unit that can be raised or tilted back for removal there is no impeding structure. Notably when moved back when the seat back is raised it can be removed in a temporary corridor created by the raised seat backs all the way to the door way.

Fig 21-12 shows a different embodiment of the lower AirSleeper unit. It has a lower bracing element that can transfer moments and tensile and compressive loadings to the adjoining unit. The bracing sections are housed in the armrest which also functions as part of sleep surface.

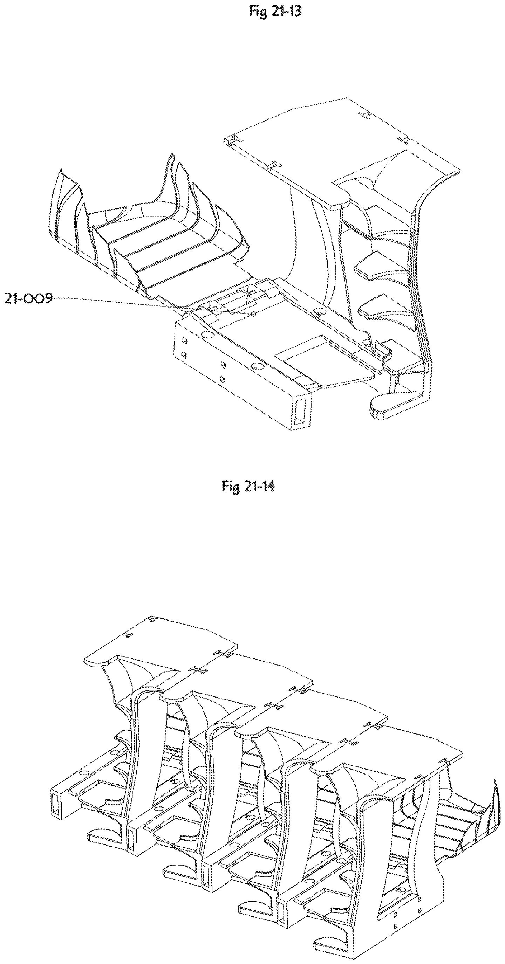

Fig 21-13 shows the embodiment of Fig 21-12 with the seat assembly installed.

Fig 21-14 shows an array of lower AirSleeper units attached together. The lateral latches between the lower units if in an embodiment may have spacers and the arm rest/side brace units displaced from the surface of the adjoining Air Sleeper unit so that removal and replacement is facilitated. Such spacers may be designed to be retractable into the body of the side brace when the latch is enabled. le, the latch can be deployed through the aperture shown along with spacers that offer compressive load support while the latch provides tensile and/or lateral load support about the aperture on the adjoining unit. Such an arrangement would result in a gap between adjoining AirSleeper units that will facilitate removal and replacement of individual units without affecting the adjoining structures.

Fig 21-15 illustrates the array of fig 21-14, where one of the upper AirSleeper units have been detached for removal.

Fig 21-16 illustrates the array of figure 21-14, where the lower unit has been detached for removal. As can be seen, there is lateral movement possible for ease of removal of the lower AirSleeper unit.

Notably the illustrations are for the embodiments where the lower airsleeper units are mounted directly to the seat tracks. This may be at a low level just above the seat tracks as shown or with extending sections of the beam section 21-007 below the level of the seat pan support 21-003. They may be indirectly mounted to the seat tracks as well. For example, a foot/frame structure may be used below the lower AirSleeper units as in prior disclosures and the Lower AirSleeper units secured to the top of such foot frame assemblies. In such elevated architecture for the Lower AirSleeper units the Latch wells may not need to be deep and may not be needed at all of the excursion of the latch support points of the foot/frames relative to the seat tracks are moderate

### DETAILED DESCRIPTION OF INVENTION

### This section is not a part of the elected invention:

### AirSleeper components

### Table top for AirSleeper

The tabletop mechanism in an airsleeper we havemany embodiments. Theembodiment shown has multiple functions. First is a tabletop, second as a privacy screen and third as a projection screen for a projector mounted either above the occupant or on the seatback of the occupant seat.

This embodiment of the tabletop is designed to fold into the side of the air sleeper seat. As may be seen from figures 5 and 6.

It is often useful to have a privacy screen at the front edge of the table as in conventional tables where a tablecloth is used to hang over the edge of the table. Moreover in common use desks have a front surface in front of the working surface to offer privacy to the user. These concepts are useful in the design of the present invention in this embodiment. Notably the privacy screen may be of a flexible materials such as a fabric curtain or may be stiff or semi flexible.

Figures show the use of the tabletop as a screen for privacy as well. For this the tabletop is rotated through 90° so that it is vertical on your vertical and across the occupant seat. It will continue to have below it the privacyscreen, which results in an extended privacy screen surface.

In additionconsidering that it may be useful for the occupant to have the privacy screen at the edge of the air sleeper cabin space bordering the aisle, the mechanism proposed herein allows the tabletop now in a vertical position and also the privacy screen to be rotated about a vertical axis to be parallel to the aisle. Moreover the sliding and pivoting mechanisms proposed can mold the screen right to the edge of the aisle to maximize the space that is protected by the privacy screen.

Another function of the proposed embodiment of the tabletop, is that it can be articulated forward and down so that it clears the knees of the occupant but provides a horizontal tabletop surface ata lower level for ease of service by service providers, and thereafter raised to a convenient height and position by the occupant. Notably such a articulation can be effected by a handle attached to the front pivot arm in this embodiment and multiple position locks that allows the table to be locked in different positions as it swings forward and slides forward.

In many variations of this embodiment there will be end stops to ensure that the table maintains a appropriate orientation and pivotal motion or sliding motion is limited to ensure such performance. **Projector alignment**
yet another feature of the present invention is a mechanism for aligning a projector which is mounted on the seatback and is enabled to focus on a fixed screen regardless of the position of the seatback. The invention uses the vertical as a reference-derived from gravitational direction that comes from hanging the projector mechanism from above, and the angle of the seatback. As may be seen from the diagrams in figures 8 and 9 the parallelogram illustrates how using a predetermined fraction of the angle of the seatback along with the vertical/horizontal will allow the angular motion of the projected direction to be what is required tofocuson thescreen. A fixed angular displacement can be added to ensure that screens at any fixed position can be addressed bysucha mechanism.

Such a projector alignment can be used for screens that are derived from tabletops or on screens that are using other mechanisms deployed in front of the occupant.

Another embodiment of the projector functionality, senses the distances of different parts of the surface for projection from the projector and using transforms well known in the art modifies the image so that for the viewer the image appears to be on a flat surface orthogonal to the viewing direction. Such a surface can be a curved surface or a inclined surface relative to the orthogonal plane to the direction of viewing of the occupant.

Considering that in many orientations of the occupant, the occupants reach ergonomically cannot be anywhere near the screen. Therefore, an additional embodiment permits gestures of swipes and clicks in free space, based on infrared and other sensing technologies well known in the art in a predefined space in front of the occupant. This will permit the occupant to control the screened visual stimuli without moving from a comfortable position in the occupant support. Such sensing technologies could use a plurality of direction and distance sensing features scanning the noted predefined space. In some embodiments can also include typing "typing" in free space ahead of the occupant with finger movements aligned to the projected image from the line of sight of the occupant. Again transforms are well known in the art to transform the movements of fingertips of the occupant in Euclidean space to the desired movements for addressing the projection on the screen-for example typing or swiping or other movements with predefined interpretations.

### Kick drawer for storage

The embodiments disclosed herein have a drawer for storage of large items of cabin luggage.

In conventional commercial aircraft cabin luggage isstored in overhead compartments. S such storage is both inconvenient and unsafe. Particularly for people smaller stature lifting heavy baggage above head level and storing itin the overhead baggage compartment is not easy and can even cause injury. Moreover, if such overhead luggage compartments open during flight the result could be serious injury to passengers below. Therefore an alternative storage arrangement is provided in this embodiment of the invention where baggage is stored below the passenger seats. Considering that there is a long space extending from the aisle in drawer is used in some embodiments using a belt as well for storage at the level of cabin baggage. The figures sure the process of using this in another feature of the present invention where a kick switch is used for both opening and locking the drawer. This makes it easy for the occupant to store his/her baggage without even bending down to open and close the bin.

Yet another embodiment has a ratchet arrangement for the belt inside the drawer. When the drawer is kicked shut with a (heavy) bag on the belt, when the drawer is seated and cannot move further in, the momentum of the heavy bag will pull the belt to move further down into the drawer with the bag so that space is now available for the next bag at the end of the belt near the front edge. When the drawer is opened however and stops at the open position with the same heavy bag on the belt the bag does not slide forward and therefore the next bag can be placed at the end of the belt.

A switch reverses the ratchet at the end of the flight. This can be manual or electronic with a central control. When the ratchet is reversed, the momentum of the bag is allowed to drag the belt forward towards the front but not backward when shut, therefore bags are shifted forwards for easy removal.

### Side screens for privacy

yet another embodiment of the present invention as noted herein are privacy screens on the sides of the upper tier of the airsleeperwherein these pop-up screens are enabled to rise up when the passenger reclines to a flat bed position. They can also be independently actuated by the occupant in desired to offer greater privacy at any time.

### End of non-elected invention.

### This section relates to the elected invention:

### EconomySeat with full recline- adaptive support seat.

The challenge in full recline seats to become near flat beds but at a recline angle rather than horizontal, is that the passenger tends to slide down and it makes it very inconvenient as passengers will find themselves on the floor if a steep incline of the seat bottom is offered. However, particularly in economy class where there is limited space, there cannot be low angle reclines. The angles need to be steep at the economically feasible pitch or seat spacing. The present invention offers a solution. The seat bottom and/ back has lateral elements that are hinged near their lower edge (pivotal) and in some embodiments spring loaded to stay flat and in other embodiments spring loaded or otherwise oriented prior to occupant contact, to have the crests of the pivoted elements to be elevated so that a orthogonal loading to the surface of the seating surface pushes the crests down and flat with the seating surface, but a parallel loading to the seating surface pivots the elements out or in some cases simply maintains them in the initial open position so that the occupant encounters a reactive force in the direction parallel to the seating surface as the occupant tends to slide down the surface due to gravity and an inclined seating surface. One of the key roles of these elements therefore is to support the occupant when there is a loading as in the occupant/passenger that attempted to slide down ie parallel to the seating surface, the lateral elements engage different points on the occupant' body and rotate upwards (and in some embodiments maintained in the initial rotated "open" position) thereby the crests of the elements creating a support from moving downwards. These lateral elements may be made with soft edges to be comfortable but still supportive. They may also be fluid filled or gas filled to provide just the right force, with an external pressure monitor with an optional pump/release valve. They could also be fluid filled with connections between the elements for viscous fluid flow to equalize pressure. There could also be spring loading parallel to the seating surface so that the elements with higher force are depressed and the loading force is equalized. Some embodiments may have a gas filled circuit among a plurality of the lateral elements that equalize pressure to minimize "Hard spots" on the supports. Some embodiments have separate pouches across the width of the elements with connections for the fluid between them with viscous loading so that the pressure equalization is gradual. Yet others have manually controllable valves for the connection channels for fluid between the lateral elements and/or between the pouches on a single element (if such multiple pouches are installed) so that the occupant can stop the flow at the optimal differential pressure between the fluid chambers for comfort. A spring loading of and any or all of the gas filled or fluid filled structures noted above may also serve as cushioning in the direction orthogonal to the seating surface as in conventional seating surfaces. Fig 18, 19, 20, 21 illustrate the operation of the adaptive support seat.

### End of section on elected invention

### The following section is not a part of the elected invention

### Single beam architecture for airsleeper units

The present invention discloses alternative architectures for the upper and lower AirSleeper units. These embodiments offer a single beam structure to support the upper as sleeper units also serving as a wall between two adjoining lower AirSleeper units, and attached to a single AirSleeper. The benefits to such an architecture first dissembled lower AirSleeper units is that the space occupied is less. Even more importantly a wider beam width in the vertical wall offers greater strength. The stair structure and particularly the rear wall behind the stairs attach to the arm rest section /side sleep surface to provide a continuous bracing structure for horizontal forces substantially orthogonal to the axis of the airsleeper occupants facing direction.

It may be seen from the figures that the stairs opposition centrally to the upper AirSleeper. However the stairs are on the side of the lower AirSleeper. This results in a synergy in utility between that of the upper and lower AirSleeper occupants.

The positioning of the stairs vis-à-vis the upper occupants, needs to have a support railing or banister that follows the steps but displays laterally for the shoulder position vis-à-vis the hip position. This is achieved in the embodiments as seen in figure 21-08 for example.

This embodiment also offers a standard seat assembly that can be inserted into the upper all the lower AirSleeper.

As may be seen, the lateral latches shown between the lower as sleeper units 21-002 can support tensile and/or compressive loadings in addition to the vertical loadings of the upper level AirSleeper units.

It may be necessary in some embodiments of the AirSleeper to have stronger bracing between the bottom ends of the lower AirSleeper units. The embodiments of FIG 21-05 with a bracing structure on either side of the seat pan in the lower AirSleeper unit would be used.

### Virtual Navigation in real spaces

This disclosure incorporates by reference in its entirety the disclosure of US Applications 60/787444 and 11/730161, 14/203,088, 14/708,594. Particular sections are explicitly disclosed herein with numbered paragraphs.

Navigation in a Real Field would be an application where the 3D virtual navigation with the device in a real 3D field in real time live programming at any location with possibly multiple sources from a network of members. Such members may be Sources or Users. The Sources provide live programming and will have one or more "World Camera(s)" (and/or "World microphone sets" for audio mono, stereo or 3D surround fields) that is aimed in the direction of sight of the Source to see what these members see (or hears) Multiple World Cameras or Microphones can give a 3D virtual space rendition. The User members have interface devices to receive the Source programming and navigation devices to navigate the 2D or 3D field of the programming. Such navigation may be with Mice Joysticks or may use the Intelligent Eye (U.S. Pat. No. 7,091,928) for such 3D navigation directly by using the eyes.

In such virtual navigation of real fields an Active Network of members, Sources agree to share their programming with Users. The same member may be both a Source and a User. Arrangements among such members may be reciprocal or for a fee. While such a network is not necessarily active and may simply transfer information from a source node to a user note, an active Network with distributed processing of video and audio information will in most cases provide the distributed computing resources to enable the operation of this infrastructure.

In addition the User may be a Source Member of a Network and would therefore have the apparatus for this. The device headset may therefore have a pair of cluster "World" cameras pointing in the direction of the face of the user (field of view of the User) to capture 3D video inputs for use of the Source Member for distribution on the Network., or recording on a local device as off-line programming.

### Wearable Computer

This embodiment will also have an organizer and other basic personal mobility resources.

### The Network

The Network provides multiple Sources for real time video at known physical locations derived from Source members in the Network, thereby enabling members of the network to navigate among these source points and even to interpolated points between them. Considering that source points may be moving such movement will provide additional information for the reconstruction of fixed objects in the local 3D space of users in any local neighborhood.

Therefore a User Member may choose a physical location or a special interest location and the Network will locate Sources in that location that wilt appear for selection by the User on the interface. This may be in the form of icons in a 3D field of real time programming derived from a Source. I.e. The field of view of a Source that is available on the World Camera may have icons representing the locations of other Source Members that the User Member can select and "hop" onto. The locations of these Members may be determined by the Network using GPS or triangulation methods with radio connections and many other well established approaches in the background art. Selection of other Sources by the User Member may be by clicking or V-clicking on the desired Source. This action will transfer the User Member to the Source World Cameras and microphones of the selected Source Member. Such navigation may be induced by visual or audio stimuli from the currently selected Source Member.

For example the preferred embodiment can be used for interactive access to real video (and audio) fields through the Network. To enable such access the device will have a menu that can select a local environment (some of these can be on a list of bookmarks or can even be (he native real environment) and the resulting displayed field will show a starting point as requested and several Sources that may be color coded for accessibility, cost, and quality where the user can navigate to and select with a V-click. On selection, the user video display shows the perspective of the selected Source and the user will passively follow the Source unless the Source has wide angle or cluster World Cameras with the Active Network enabled to pan and zoom in this field, in which case the user has some navigational freedom even within one Source. However, the remaining nodes may still be displayed for further selection and navigation thereto. (there will be menu options to turn off these node displays as well).

The user can therefore hop from one Source Member to another and see (and hear if enabled by Source) the perspective of the Source. In addition if enabled by any given Source (usually for a fee) interactive dialog with the Source and even requesting the source to "Show" a preferred field of interest.

This will amount to virtual navigation in a real field.

The Network may be hosted in part by a community of distributed wireless hub providers and other network resource providers. Who (possibly for a fee) provide local wireless bandwidth and other hub intelligence and link into the internet. Such an infrastructure with distributed resources will also enable the high computational needs for reconstruction of 3D local neighborhoods and video processing bandwidth. The infrastructure of this invention enables new approaches for TV programming with access for viewers to navigate in the real environments of interest in news or documentaries and even interview (possibly for a fee) the Source members of choice in the relevant local environment.

The Network in the preferred embodiment will comprise a distributed network of wireless bandwidth providers (Providers) that for a fee from the Network administrator will provide bandwidth locally to User Members that are a part of the Network. User Members will pay for bandwidth bandwidth can be hot spots in a local region within a city where many such local regions provide "cellular" coverage for neighborhoods and even cities. These may be substituted for or supplemented with conventional cellular bandwidth with standard billing to the administrator and indeed satellite bandwidth in remote locations. The Providers may be required to have installed in their hubs the computing infrastructure to stitch together the available Sources in the local neighborhood and have the intelligence to accept and hand off dialog with Sources/Users as they move through local neighborhoods. Providers in this preferred embodiment will initially provide bandwidth for a fixed fee set by the Active Network Administrator, and then after the initial probation period set a rate based on the market. Local providers will compete for providing bandwidth. Users will have options in selecting lowest cost or highest available bandwidth (and quality) options when selecting the Providers. Such bandwidth selection may be a background process that is set by the User. Users may select from multiple Providers (which may be other Users or Sources) based on possible fees such Providers may charge through a Network Administrator. This arrangement forms a new Business Model for Distributed Bandwidth.

An additional embodiment incorporates stitching algorithms for interpolation of fields available in the Network as source nodes of other users, thereby giving the user a continuous or near continuous range of view points and fields even between the available sources. As he Sources are moving the Active Network can recreate the fixed 3D local landscape and use that video information for interpolation for navigation of users. Such stitching together of local landscapes and city scapes can allow User Members to physically navigate from available Source Users in one local neighborhood to another using "Real Maps" created by this interpolation of the fixed landscape. While such interpolation will not be able to give perfect views, the user has the choice of using the available Source nodes or an interpolation or a combination for zooming out to encompass a wide panorama. Such interpolation processing may be enabled by distributed processing on the Active Network given the computing resources needed for each of the neighborhoods. The Network will need intelligence to locate the physical location of the sources. These can be done in some embodiments with GPS and in others simply using triangulation from the transmit points of the sources to the recent hubs or host devices that the device has latched onto recently.

If interpolation algorithms are used these will also have interpolated locations from the source locations. To supplement this, there are well established web based approaches to find physical locations of sources on the internet.

### Alternative and Additional embodiments:

Embodiments of this invention have Source Members that comprise one or more Sources with one or more cameras (ie cluster cameras). This invention includes several types of Source Members including source members adapted to move with humans, and also source members that are Machine Source Members (MCMs). Such MCMs are in some embodiments in the form of robots wherein the one or more Sources they control are on Source Vehicles such as autonomous vehicles or flying or surface drones. Multiple such Source Vehicles in some embodiments have coordinated control by the MCM Source Member For example, in some embodiments a plurality of drones fly in swarms, wherein the flight paths of members of the swarm are coordinated with each other by the MCM. Thereby moving their one or more sources in trajectories that are predefined by the MCM which in some embodiments will be in real time. Sources on such a swarm of drones or autonomous vehicles in some embodiments will each construct light fields with their motion and related position over time and the MCM is enabled to aggregate these light fields for deconstruction and reconstruction of additional views by available computing resources that may be available in the MCM.

Some embodiments of such MCMs that are connected to the Active Network are in some embodiments instructed by the Active Network on the deployment of the drones or autonomous vehicles to coordinate the construction of the respective light fields of the Sources to generate views by the Active Network. Therefore, in some of these embodiment the Sources of a Source Member are each separately mounted on a support and the motion of each Source for direction of view and position for each frame is monitored and controlled by the Source Member. Some such embodiments have fixed organization of the Sources relative to each other and they are all enable to move in concert. In other embodiments, each of the Sources has a trajectory controlled by the Source Member which may be an MCM. Some such embodiments have Sources each mounted on separate vehicles that are enabled to move. Some embodiments among these have each of the Sources mounted on a drone or a controlled flying vehicle or autonomous vehicle. Some of these embodiments have the Source Member MCM control the formation flight of the drones to create a composite light field. Some embodiments deconstruct the frames from each of the cameras, and storing the image, the camera identity by Source Member and Source, the GPS location and direction of the camera and time, such that the resulting data structure is queried to extract the specific images and their parent light fields for reconstruction of a specific view with light fields from a plurality parent light fields that are part of the composite data structure. A factor for combination of parent light fields is aging and for some views near real time imagery will be needed. In others clarity will be a priority. The recombination of the parent light fields from the aggregate light field will be determined by this requirement. Each User of the Active network may preset time sensitivity and clarity preferences that will determine the views presented of any location and related field of view. For the case of real time virtual navigation the reconstruction may have fixed landscaped as in real maps reconstructed with a set of parent light fields with deep time variation.

Construction of a view from light fields is well known in the art.

In all these embodiments the fields are available to the Active Network to reconstruct interpolated views, 3D landscapes or Real Maps. In yet other variations of this embodiment the Source Member has control of what aggregate light field is constructed in time by deploying the vehicles along pre-determined trajectories in either absolute position or relative position to the location of the Source member, to build the required light fields in a short space of time ahead of real time for anticipated 3D visualizations demanded by the Active Network. Control by the MCMs of the autonomous vehicles or drones with mounted Sources in some embodiments are transferred to the Active Network which makes deployment decisions and travel paths and view directions depending on an inferred preferences of User members. In some embodiments, the travel paths of the Source vehicles of any MCM can be adaptive in that they are not parallel with each other or bear any fixed relationship to each other but change over time under control of the MCM or Active Network to generate a target density of light fields in any region of the space that is covered for view. High density in a region of the aggregate light field can offer more quality Synthetic Sources (sources between actual sources reconstructed from the light fields) In the extreme case one or a group of Users determine the composite field created by a predetermined set of vehicle mounted Sources that are defined to create the desired field for the use of the one or group of Users. This will typically be for a fee to the Active Network or the Source Member. In such embodiments, for the real time Users, control the generated field and its time trajectory allows the 3D immersion desired by the User. In some of these embodiments the User is the leader of a virtual tour or exploration controlling the Sources of the Source Member and fees may accrue to that leader from the followers in addition to the Source member and help mitigate the cost to the leader of controlling the vehicle mounted Sources paid to the Source Member or the Active Network. Another additional embodiment comprises the noted real 3D field in programming generated from light fields at a location with multiple Sources from a network of members, where the aggregate field comprises the fields generated by the perspectives of multiple Sources where such Sources comprise one or both of cluster cameras; and moving cameras, further where in addition the reconstituted cumulative field includes occluded regions from some of the Source fields of view but are reconstituted from the aggregation of the available Source fields, thereby offering "See through" vision if so chosen by the Users or the Active Network for the reconstitution of the aggregate field with the fields of view from the Sources viewing the occluded spaces.

Another additional embodiment offering an improvement in these embodiments using the information in the available light fields would result from the combination of the restructured 3D landscapes as noted with the additional light fields available in real time to "update" the 3D model particularly with moving objects. Considering that the locations of the fields of view of the source cameras will at different points in time potentially have different lighting conditions, such as in open spaces where the position of the sun would determine the lighting conditions on the objects and landscapes in the fields of view of these cameras. The light fields generated from these frames or perspectives on an additional input parameter for the deconstruction and reconstruction of views of 3-D landscapes or even 2- D imagery that may be created from the aggregate light fields of these multiple source cameras over a period of time.

Yet another embodiment would help some sources including light emitters adapted to provide one or more colors of light and attached besides the camera, such that these light emitters attached to the cameras can provide lighting not just for the attached camera but also for other cameras in other sources to provide varied lighting conditions for the capture of frames and light fields by the respective cameras in multiple sources in a particular neighborhood. Therefore, these embodiments are not limited to a single Plenoptic Function and if there are occlusions a single related light field.

Such lighting conditions in some embodiments are predetermined and programmed with timing with natural lighting or with light emitters attached to Sources to create the necessary light fields for optimal deconstruction and reconstruction of desired fields for the active network. Light emitters in yet other embodiments may also be deployed in separate autonomous vehicles and controlled by the MCM and in some embodiments the Active Network to provide the desired lighted surface topologies desired for the constituent light fields from the Sources available.

Yet other embodiments will have the programming of lighting conditions predefined by the Active Network based on demand from users compiled by the Active Network. Yet other embodiments would incorporate a business system for costing and therefore pricing and billing users for the service that has such optimized capture techniques for the constituent light fields which includes the additional lighting sources and locations of the sources and/ or their trajectories in space.

Yet another embodiment has multiple sources with cameras targeting a scene or landscape where the cameras are set to have different focal lengths and therefore capture different slices in the Fourier domain of the 4-D light fields, thereby enabling refocusing ex post of the light fields computationally by the active network. Some such embodiments would have us single source with multiple frames captured in quick succession with different focal lengths of the camera to create the multiple slices in the Fourier domain of the 4-D light field.

Furthermore, embodiments of this invention are not limited to a 4D- light field of a convex space as subject. Some embodiments of the invention will have sources that are enabled to position themselves behind occlusions and therefore provide additional constituent light fields to create an aggregate light field that includes the occluded regions for reconstruction of views that are enabled to view target objects scenes and landscapes not simply for reconstruction using light fields from sources that are not blocked by the occluding surface but a more complete selection of possible constituent light rays from such sources placed behind the occlusion therefore in some cases reconstituting one or more 5-D Plenoptic Functions.

Yet other embodiments, have the active network detecting occluding surfaces and in preprogrammed motion sequences for Sources controlled by MCMs are enabled to have trajectories of motion, or get positioned in such spaces behind the occlusions to construct the consequent light fields for the aggregate light field for reconstruction of the desired views by the active network.

Yet other embodiments have electromagnetic field detection sensors mounted in one or more MCM controlled drones, which sense electromagnetic fields in the vicinity of their flight trajectories, and wherein one or more drones are battery powered and have inductive coupling coils attached to said batteries, and wherein the drones are constructed to enabled to locate their inductive coupling coils in the vicinity of a detected external electromagnetic field. In some embodiments, a swarm of drones with one or more drones so endowed will have such endowed drones transmit the location and the images of the electromagnetic field source and the MCM and in some cases the Active Network identifies the nature of the electromagnetic source and instructs the drones to park in specified positions to locate their inductive coupling coils in suitable positions to generate a current is such coils and recharge their batteries. A large swarm of such drones can scout out such sources with their source cameras and EM sensors when power in drones is running low and direct one or more drones to the recharge opportunity.

The frames of all the cameras of the Sources may in addition be classified by location, direction and time and be selected to from resulting dense field for ex-post interpolation or focusing. The frames if indexed by time can also be selected from time ranges and may be used for selection of the frames if needed if the neighborhoods are changing.

Some embodiments have icons for navigation to the view point of the related icon in the field of view of the current Source presented to the User, placed on that field of view at the locations of available Sources in the occluded regions which offers a better context assessment by the user than such icons placed in those locations but with the occluding objects preventing the actual view of the locations themselves from these occluded Sources. Moreover, yet other embodiments use the constituted light fields generated by such sources that are in the occluded regions to create an aggregate light field and then reconstruct views from one or more positions even between the available sources in the occluded regions or Synthetic Sources. Such Synthetic Sources may be accessed for use by the user by locating icons on the field of view presented to the user, of the scene. Such icons can in some embodiments be colored differently to represent the occluded regions. Moreover, such icons can cover the space representing several positions where reconstruction of such views are possible from the aggregate light field. Therefore, a selection on the icon covering a space can provide views from one or more Synthetic Sources that are available in the space covered by the icon depending on where on the icon the selection is made. Such multi-point icons may be color coded to differentiate them from single point icons. However, a plurality of single point icons can be used instead for selection therein for a view from the position of that icon in the current Source view of the User.

A time 3D history or documentary of any such neighborhood is constructed inyetanother embodiment by reconstructing the fields from a narrow time range of frames using position, and direction information in their fields of view.

It will be possible with these embodiments to immerse the User in the past with the entire 3D neighborhood. This would amount to virtual navigation in in time and space.

These embodiments may be used to build Real Maps or 3D Landscapes or interpolation of views between view points as previously noted but may also be used directly as fields for manipulation ex-post by User Members for ex-post focusing the field of view in an available field.

The ordered time sequences of the generated fields can use cluster cameras to generate wide fields for translation of the perspective of the User with icons representing the available points -and in combination-regions from which such views areavailable. Such features will be useful for immersive movies. Some embodiments have multiple Source Members thatoffer different perspectives. Each of the Source Members is some embodiments will have multiple Sources organized to follow predetermined paths that could be arrays allowing ex-post (in the movie) User focus on items of interest and or the perspective of interest. In some embodiments such Source Members can be MCMs and Sources are drone mounted to follow predetermined trajectories to construct predetermined planned aggregate light fields that define the immersive movies.

In some embodiments the individual cameras in the noted camera cluster are arranged in a row and their motion ie the motion of the Source is orthogonal to the row of cameras and therefore the time sequence of frames from the cameras generate an array of views that generate the field available to the Active Network for reconstruction of views, landscapes or real maps.

Further embodiments have Source cameras with complete 360 degree fields of view. This may be implemented with camera clusters as noted.

Some embodiments have their camera clusters organized as rectangular arrays of cameras to build the required field.

Some embodiments have their camera clusters organized as an elliptical array of cameras to build the required field.

Some embodiments include a Source support for hand held Sourceson the Source Member to provide source programming to the Active Network even when said source is not hand held. These supports may allow the use of the Source on a device such as a mobile phone with the camera(s) pointing forward or another pre-determined direction. This may be simply a chord around the neck of the Source member with the camera as a pendant pointing forward.

It could also be a pendant designed to allow the use of the phone screen by the Source Member, while at the same time providing the Source streaming to the ActiveNetwork as in Fig 17.

### End of section on non-elected invention.

### CONCLUSIONS, RAMIFICATIONS&SCOPE

It will become apparent that the present invention presented, provides a new paradigm for implementing key safety features comfort and convenience features for occupants in vehicles.

## Claims

1. A seat for an occupant with two seat elements: a back; and a bottom, for the support of said occupant, **characterized in that** the seat further comprises pivoted elements that are arranged for at least a part of one or both of: the front edge of the seat bottom to the rear edge of the seat bottom; and the lower end of the seat back to the upper edge of the seat back, wherein said pivoted elements have an initial position, a flat position and an elevated position, wherein in the seated position said pivoted elements provide support to the occupant that is substantially orthogonal to the attached seat elements, and wherein in the elevated position said pivoted elements engage with crests, a surface of the occupant in a direction parallel to the surface of the seat elements if there is a parallel relative motion between the seat elements and the occupant, and wherein the initial position may be either the flat position or a partially elevated or a fully elevated position, and wherein said engagement of said pivoted elements upon such parallel relative motion pivot up said elements to present a ridged surface comprising the crests of the ends of the pivoted elements (Fig 20-21), thereby limiting the motion of the occupant with support from said ridges.

2. A seat as in claim 1, wherein the seat bottom and seat back are adapted to incline to a substantially flat and inclined surface, thereby enabling the occupant to lie flat but at an inclination with adequate vertical support by the ridges provided by the pivoted elements.

3. A seat as in any of the preceding claims, comprising a plurality of pivoted elements across one or both of the width of the seat bottom and the seat back.

4. A seat as in any of the preceding claims, wherein the crests of the pivotal elements areflexible and configured to conform to the occupantto limit the load of the individual pivotal elements thereby distributing the load across the plurality of pivoted elements.

5. A seat as in any of the preceding claims, wherein the crests of the pivotal elements are fluid filled with connections between crests of said elements to equalize pressure between elements, to limit the load of the individual pivotal elements thereby distributing the load across the plurality of pivoted elements.

6. A seat as in any of the preceding claims, wherein the pivots are spring loaded in a direction parallel to the seating surface of one or both of the seat back and the seat bottom.

## Patentansprüche

1. Sitz für einen Insassen mit zwei Sitzelementen: einer Sitzlehne; und eine Sitzfläche zum Stützen des Insassen, **dadurch gekennzeichnet, dass** der Sitz ferner schwenkbare Elemente umfasst, die für mindestens einen Teil von einem oder beiden von: der Vorderkante der Sitzfläche bis zur Hinterkante der Sitzfläche angeordnet sind ; und das untere Ende der Sitzlehne bis zur Oberkante der Sitzlehne, wobei die schwenkbaren Elemente eine Anfangsposition, eine flache Position und eine erhöhte Position aufweisen, wobei die schwenkbaren Elemente in der Sitzposition dem Insassen im Wesentlichen eine Stütze bereitstellen orthogonal zu den angebrachten Sitzelementen, und wobei die schwenkbaren Elemente in der erhöhten Position mit Erhebungen einer Oberfläche des Insassen in einer Richtung parallel zur Oberfläche der Sitzelemente in Eingriff kommen, wenn es eine parallele relative Bewegung zwischen den Sitzelementen und dem Insassen gibt, und wobei die Anfangsposition entweder die flache Position oder eine teilweise erhöhte oder eine vollständig erhöhte Position sein kann, und wobei der Eingriff der schwenkbaren Elemente bei einer solchen parallelen relativen Bewegung die Elemente nach oben schwenkt, um eine gerippte Oberfläche darzustellen, die die Kämme der Enden umfasst der schwenkbaren Elemente (Abb. 20-21), wodurch die Bewegung des Insassen mit Unterstützung durch den Kamm begrenzt wird.

2. Sitz nach Anspruch 1, wobei die Sitzfläche und die Sitzlehne angepasst sind, um sich zu einer im Wesentlichen flachen und geneigten Oberfläche zu neigen, wodurch es dem Insassen ermöglicht wird, flach, aber geneigt zu liegen, mit angemessener vertikaler Unterstützung durch Der grat , die durch das Drehgelenk bereitgestellt werden Elemente.

3. Sitz nach einem der vorangehenden Ansprüche, umfassend eine Vielzahl von schwenkbaren Elementen über eine oder beide der Breite der Sitzfläche und der Sitzlehne.

4. Sitz nach einem der vorhergehenden Ansprüche, wobei die Oberseiten der schwenkbaren Elemente flexibel und so konfiguriert sind, dass sie sich an den Insassen anpassen, um die Belastung der einzelnen schwenkbaren Elemente zu begrenzen, wodurch die Belastung über die mehreren schwenkbaren Elemente verteilt wird.

5. Sitz nach einem der vorhergehenden Ansprüche, wobei die Oberseiten der Schwenkelemente mit Verbindungen zwischen den Oberseiten der Elemente fluidgefüllt sind, um den Druck zwischen den Elementen auszugleichen, um die Belastung der einzelnen Schwenkelemente zu begrenzen, wodurch die Belastung über die verteilt wird mehrere schwenkbare Elemente.

6. Sitz nach einem der vorhergehenden Ansprüche, wobei die Drehgelenke in einer Richtung parallel zur Sitzfläche der Sitzlehne und/oder der Sitzfläche federbelastet sind.

## Revendications

1. Un siège pour un occupant avec deux éléments de siège : un dossier de siège ; et un fond de siège, pour le support dudit occupant, **caractérisé en ce que** le siège comprend en outre des éléments pivotants qui sont agencés pour au moins une partie de l'un ou des deux : du bord avant du fond de siège au bord arrière du fond de siège ; et l'extrémité inférieure du dossier de siège jusqu'au bord supérieur du dossier de siège, dans lequel lesdits éléments pivotants ont une position initiale, une position à plat et une position surélevée, dans lequel, dans la position assise, lesdits éléments pivotants fournissent un support à l'occupant qui est sensiblement orthogonal aux éléments de siège attachés, et dans lequel, dans la position élevée, lesdits éléments pivotants s'engagent avec des crêtes, une surface de l'occupant dans une direction parallèle à la surface des éléments de siège s'il existe un mouvement relatif parallèle entre les éléments de siège et l'occupant , et dans lequel la position initiale peut être soit la position à plat, soit une position partiellement surélevée ou complètement surélevée, et dans lequel ledit engagement desdits éléments pivotants lors d'un tel mouvement relatif parallèle fait pivoter lesdits éléments pour présenter une surface striée comprenant les crêtes des extrémités des éléments pivotants (Fig 20-21), limitant ainsi le mouvement de l'occupant avec l'appui du faîte.

2. Siège selon la revendication 1, dans lequel le fond du siège et le dossier du siège sont adaptés pour s'incliner vers une surface sensiblement plane et inclinée, permettant ainsi à l'occupant de s'allonger à plat mais à une inclinaison avec un support vertical adéquat par les arêtes fournies par le pivot éléments.

3. Siège selon l'une quelconque des revendications précédentes, comprenant une pluralité d'éléments pivotants sur l'une ou les deux de la largeur de l'assise du siège et du dossier du siège.

4. Siège selon l'une quelconque des revendications précédentes, dans lequel les sommets des éléments pivotants sont flexibles et configurés pour s'adapter à l'occupant afin de limiter la charge des éléments pivotants individuels répartissant ainsi la charge sur la pluralité d'éléments pivotants.

5. Siège selon l'une quelconque des revendications précédentes, dans lequel les sommets des éléments pivotants sont remplis de fluide avec des connexions entre les sommets desdits éléments pour égaliser la pression entre les éléments, pour limiter la charge des éléments pivotants individuels répartissant ainsi la charge à travers le pluralité d'éléments pivotants.

6. Siège selon l'une quelconque des revendications précédentes, dans lequel les pivots sont chargés par ressort dans une direction parallèle à la surface d'assise de l'un ou des deux parmi le dossier de siège et le fond de siège.
